# EUROPEAN PATENT APPLICATION

(11) **EP 4 636 586 A1**
(43) Date of publication of application: **22.10.2025**
(21) Application number: 23905936.3
(22) Date of filing: 19.12.2023
(51) Int. Cl.: G06F 9/455, G06F 9/48, G06F 9/50

(54) **RESOURCE SCHEDULING METHOD AND APPARATUS, AND INTELLIGENT DRIVING DEVICE**

(30) Priority: 19.12.2022 CN 202211632988
(71) Applicant: Shenzhen Yinwang Intelligent Technologies Co., Ltd., Shenzhen, Guangdong 518110 (CN)
(72) Inventor: TVERDYSHEV, Sergey, Shenzhen, Guangdong 518129 (CN); CAO, Jianlong, Shenzhen, Guangdong 518129 (CN)
(74) Representative: MERH-IP Matias Erny Reichl Hoffmann Patentanwälte PartG mbB
(86) International application number: PCT/CN2023/139800
(87) International publication number: WO 2024/131773

(57) **Abstract**

Embodiments of this application provide a resource scheduling method and apparatus, and an intelligent driving device. The method is applied to an apparatus including a plurality of virtual machines and a hypervisor. The hypervisor is configured to allocate M physical central processing units PCPUs to the plurality of virtual machines, M is a positive integer, the plurality of virtual machines include a first virtual machine, and the method includes: The first virtual machine obtains a first load status of M virtual central processing units VCPUs on the first virtual machine; and the first virtual machine lends a first PCPU to the hypervisor or borrows a second PCPU from the hypervisor based on a quantity of PCPUs allocated by the hypervisor to the first virtual machine and the first load status, where the M PCPUs comprise the first PCPU and the second PCPU. Embodiments of this application may be applied to an intelligent vehicle or an electric vehicle, to help improve utilization of computing resources.

## Description

This application claims priority to Chinese Patent Application No. 202211632988.4, filed with the China National Intellectual Property Administration on December 19, 2022, and entitled "RESOURCE SCHEDULING METHOD AND APPARATUS, AND INTELLIGENT DRIVING DEVICE", which is incorporated herein by reference in its entirety.

### TECHNICAL FIELD

Embodiments of this application relate to the computer field, and more specifically, to a resource scheduling method and apparatus, and an intelligent driving device.

### BACKGROUND

A mixed criticality system (mixed criticality system, MCS) is a system that contains computer hardware and software. The hardware of the MCS may include a plurality of physical central processing units (physics central processing unit, PCPU) and provide a hardware virtualization capability. Based on hardware, a hypervisor (Hypervisor) may load, start, and manage a plurality of virtual machines (virtual machine, VM). The hypervisor allocates the PCPUs to the virtual machines.

The PCPUs are limited resources, and a requirement of enough PCPUs usually cannot be met due to a cost restriction. A current resource scheduling mode is that each virtual machine accurately receives fair PCPU resources of the virtual machine. For some virtual machines, these PCPU resources are excessive, resulting in low system resource utilization.

### SUMMARY

Embodiments of this application provide a resource scheduling method and apparatus, and an intelligent driving device, to help improve utilization of computing resources.

According to a first aspect, a resource scheduling method is provided, where the method is applied to an apparatus including a plurality of virtual machines and a hypervisor, the hypervisor is configured to allocate M physical central processing units PCPUs to the plurality of virtual machines, M is a positive integer, the plurality of virtual machines include a first virtual machine, and the method includes: The first virtual machine obtains a first load status of M virtual central processing units VCPUs on the first virtual machine; and the first virtual machine lends a first PCPU to the hypervisor or borrows a second PCPU from the hypervisor based on a quantity of PCPUs allocated by the hypervisor to the first virtual machine and the first load status, where the M PCPUs include the first PCPU and the second PCPU.

In this embodiment of this application, the first virtual machine may lend a PCPU to the hypervisor or borrow a PCPU from the hypervisor based on a load status of a VCPU and a quantity of PCPUs allocated by the hypervisor to the first virtual machine, to help improve utilization of computing resources.

For example, the hypervisor may allocate the M PCPUs to the first virtual machine and a second virtual machine, and may separately present the M VCPUs to the first virtual machine and the second virtual machine, that is, the PCPUs and the VCPUs are mapped, in a ratio of 1:1, to each virtual machine. In an initial state, the quantity of PCPUs allocated by the hypervisor to the first virtual machine is N, and a quantity of PCPUs allocated by the hypervisor to the second virtual machine is M-N, where N is less than or equal to M, and N is a positive integer. For a virtual machine, a quantity of VCPUs instead of a quantity of PCPUs allocated by the hypervisor to the virtual machine is displayed to the virtual machine. The M VCPUs are displayed to both the first virtual machine and the second virtual machine.

That the first virtual machine lends the first PCPU to the hypervisor may also be understood as that the hypervisor borrows the first PCPU from the first virtual machine. That the first virtual machine borrows the second PCPU from the hypervisor may be understood as that the hypervisor lends the second PCPU to the first virtual machine.

With reference to the first aspect, in some implementations of the first aspect, before lending the first PCPU to the hypervisor or borrowing the second PCPU from the hypervisor, the method further includes: The first virtual machine sends first request information to the hypervisor, where the first request information is used to request information about the quantity of PCPUs allocated by the hypervisor to the first virtual machine; and the first virtual machine receives first response information sent by the hypervisor for the first request information, where the first response information indicates the information about the quantity.

In this embodiment of this application, the first virtual machine may request, from the hypervisor, the information about the quantity of PCPUs allocated to the first virtual machine, so that the first virtual machine can obtain, from the hypervisor, the information about the quantity of the PCPUs allocated to the first virtual machine. This helps the first virtual machine adjust a resource scheduling policy in time, to help improve utilization of computing resources.

In some possible implementations, in addition to the information about the quantity, the first response information may further indicate an identifier of each of one or more PCPUs allocated to the first virtual machine.

With reference to the first aspect, in some implementations of the first aspect, the quantity of PCPUs allocated by the hypervisor to the first virtual machine is N, where N is a positive integer, and N is less than or equal to M; and that the first virtual machine lends the first PCPU to the hypervisor or borrows the second PCPU from the hypervisor based on the quantity of PCPUs allocated by the hypervisor to the first virtual machine and the first load status includes: The first virtual machine lends at least a part of N-L PCPUs to the hypervisor when the first load status indicates that a quantity L of VCPUs that run tasks and that are in the M VCPUs on the first virtual machine is less than N, where L is a positive integer.

In this embodiment of this application, the first virtual machine may lend the at least a part of the N-L PCPUs to the hypervisor when the quantity of VCPUs that run tasks and that are in the M VCPUs on the first virtual machine is less than the quantity of PCPUs allocated to the first virtual machine. In this way, idle PCPU resources may be reallocated by the hypervisor, to help improve utilization of computing resources.

In some possible implementations, the method further includes: The first virtual machine lends the at least a part of N-L PCPUs to the hypervisor when the first load status indicates that L VCPUs in the M VCPUs on the first virtual machine run tasks and CPU usage of each of the L VCPUs is less than or equal to a preset threshold, where L is a positive integer.

For example, the preset threshold is 70%. The quantity of PCPUs allocated by the hypervisor to the first virtual machine is 2. When the first load status indicates that the first VCPU on the first virtual machine runs a task and CPU usage is greater than 70%, and the second VCPU runs a task and CPU usage is less than or equal to 70%, the first virtual machine may lend one PCPU to the hypervisor.

With reference to the first aspect, in some implementations of the first aspect, the plurality of virtual machines include a second virtual machine, and the method further includes: The second virtual machine obtains a second load status of M VCPUs on the second virtual machine; the second virtual machine sends second request information to the hypervisor when the second load status indicates that a quantity of VCPUs that run tasks and that are in the M VCPUs on the second virtual machine is greater than a quantity of PCPUs allocated by the hypervisor to the second virtual machine, where the second request information is used to request to borrow a PCPU from the hypervisor; and the hypervisor lends at least a part of the N-L PCPUs to the second virtual machine based on the second request information.

In this embodiment of this application, the second virtual machine may request to borrow a PCPU from the hypervisor when the quantity of VCPUs that run tasks and that are in the M VCPUs on the second virtual machine is greater than the quantity of PCPUs allocated by the hypervisor to the second virtual machine. In this way, after the first virtual machine lends the at least a part of the N-L PCPUs to the hypervisor, the hypervisor may lend the at least a part of the N-L PCPUs to the second virtual machine. The second virtual machine may obtain enough PCPUs, to facilitate running of a task on the second virtual machine.

In some possible implementations, the second request information further includes information about a quantity of PCPUs that the second virtual machine expects to borrow from the hypervisor.

With reference to the first aspect, in some implementations of the first aspect, the quantity of PCPUs allocated by the hypervisor to the first virtual machine is R, where R is a positive integer, and R is less than or equal to M; that the first virtual machine lends the first PCPU to the hypervisor or borrows the second PCPU from the hypervisor based on the quantity allocated by the hypervisor to the first virtual machine and the first load status includes: The first virtual machine sends third request information to the hypervisor when the first load status indicates that a quantity L of VCPUs that run tasks and that are in the M VCPUs on the first virtual machine is greater than R, where the third request information is used to request to borrow L-R PCPUs from the hypervisor, and L is a positive integer; and the method further includes: The hypervisor lends the L-R PCPUs to the first virtual machine based on the third request information.

In this embodiment of this application, the first virtual machine may request to borrow the L-R PCPUs from the hypervisor when the quantity L of VCPUs that run tasks and that are in the M VCPUs on the first virtual machine is greater than the quantity R of PCPUs allocated to the first virtual machine. In this way, the first virtual machine may obtain enough PCPUs, to facilitate running of a task on the first virtual machine.

With reference to the first aspect, in some implementations of the first aspect, the plurality of virtual machines further include a third virtual machine, and before lending the L-R PCPUs to the first virtual machine, the method further includes: The hypervisor borrows the L-R PCPUs from the third virtual machine when a minimum quantity of PCPUs required by the third virtual machine is less than a quantity of PCPUs occupied by the third virtual machine.

In this embodiment of this application, the hypervisor may actively borrow the L-R PCPUs from the third virtual machine. In this way, a computing resource requirement of the first virtual machine can be met in time, and real-time performance of the first virtual machine can be ensured.

The quantity of PCPUs occupied by the third virtual machine may also be understood as a quantity of PCPUs allocated by the hypervisor to the third virtual machine.

For example, the first virtual machine is a real-time criticality system, and the third virtual machine is a non-real-time criticality system (for example, a vehicle entertainment system). When the real-time criticality system requests to borrow the L-R PCPUs from the hypervisor, if the hypervisor does not have a PCPU available for lending or have enough PCPUs available for lending, the hypervisor may actively lend a PCPU from the non-real-time criticality system that meets a condition. In this way, waiting duration from sending a request to the hypervisor by the real-time criticality system to borrowing a PCPU from the hypervisor can be reduced. This helps ensure that tasks of the real-time criticality system are run on enough PCPUs in time, to help improve real-time performance of the real-time criticality system, and also help improve utilization of computing resources.

With reference to the first aspect, in some implementations of the first aspect, lending the first PCPU to the hypervisor includes: The first virtual machine unbinds a first VCPU from a task run on the first VCPU, where the M VCPUs on the first virtual machine include the first VCPU, and there is a mapping relationship between the first VCPU and the first PCPU; and the first virtual machine migrates the task run on the first VCPU to a second VCPU, where the second VCPU is a VCPU other than the first VCPU in the M VCPUs on the first virtual machine.

In this embodiment of this application, when lending the first PCPU to the hypervisor, the first virtual machine only needs to unbind the first VCPU from the task run on the first VCPU and migrate the task to another VCPU. This does not relate to power-on and power-off of the PCPU and kernel thread shutdown. In this way, when the first PCPU is lent, performance overheads of the kernel are reduced, so that the PCPU can be quickly switched in real time.

With reference to the first aspect, in some implementations of the first aspect, the first virtual machine is a virtual machine corresponding to a real-time criticality system.

According to a second aspect, a resource scheduling method is provided, where the method may be applied to a hypervisor, the hypervisor is configured to allocate M PCPUs to a plurality of virtual machines, the plurality of virtual machines include a first virtual machine, and the method includes: obtaining first request information from the first virtual machine; and when the first request information is used to request to lend a first PCPU to the hypervisor, borrowing the first PCPU from the first virtual machine; or when the first request information is used to request to borrow a second PCPU from the hypervisor, lending the second PCPU to the first virtual machine, where the M PCPUs include the first PCPU and the second PCPU.

With reference to the second aspect, in some implementations of the second aspect, before obtaining the first request information from the first virtual machine, the method further includes: obtaining second request information from the first virtual machine, where the second request information is used to request information about a quantity of PCPUs allocated by the hypervisor to the first virtual machine; and sending response information for the second request information to the first virtual machine, where the response information includes the information about the quantity of PCPUs allocated by the hypervisor to the first virtual machine.

With reference to the second aspect, in some implementations of the second aspect, before obtaining the first request information from the first virtual machine, the method further includes: The hypervisor allocates N PCPUs to the first virtual machine, where N is a positive integer and N is less than M, the N PCPUs have a mapping relationship with N VCPUs in M VCPUs on the first virtual machine, and the N PCPUs include the first PCPU; and borrowing the first PCPU from the first virtual machine includes: removing a mapping relationship between the first PCPU and a first VCPU, where the N VCPUs include the first VCPU.

With reference to the second aspect, in some implementations of the second aspect, lending the second PCPU to the first virtual machine includes: establishing a mapping relationship between the second PCPU and a second VCPU, where the M VCPUs include the second VCPU.

With reference to the second aspect, in some implementations of the second aspect, the method further includes: when the first request information is used to request to borrow the second PCPU from the hypervisor, determining whether the first virtual machine meets a condition for borrowing a PCPU from the hypervisor; and if a condition for borrowing a PCPU from the hypervisor is met, lending the second PCPU to the first virtual machine.

In some possible implementations, whether the first virtual machine meets the condition for borrowing a PCPU from the hypervisor includes whether the first virtual machine is a virtual machine corresponding to a real-time criticality system. If the first virtual machine is the virtual machine corresponding to the real-time criticality system, the first virtual machine meets the condition for borrowing a PCPU from the hypervisor.

With reference to the second aspect, in some implementations of the second aspect, when it is determined that the first virtual machine meets the condition for borrowing a PCPU from the hypervisor, and a quantity of third PCPUs available for lending in the hypervisor is less than a quantity of second PCPUs, a fourth PCPU is borrowed from a third virtual machine, where a quantity of fourth PCPUs is obtained by subtracting a quantity of third PCPUs from the quantity of second PCPUs, and the third virtual machine is one or more virtual machines other than the first virtual machine in the plurality of virtual machines.

With reference to the second aspect, in some implementations of the second aspect, the method further includes: The hypervisor borrows the fourth PCPU from the third virtual machine when a minimum quantity of PCPUs required by the third virtual machine is less than a quantity of PCPUs occupied by the third virtual machine.

According to a third aspect, a resource scheduling apparatus is provided, where the apparatus includes a plurality of virtual machines and a hypervisor; the hypervisor is configured to allocate M physical central processing units PCPUs to the plurality of virtual machines, where M is a positive integer; the plurality of virtual machines include a first virtual machine; the first virtual machine is configured to obtain a first load status of M virtual central processing units VCPUs on the first virtual machine; and the first virtual machine is further configured to lend a first PCPU to the hypervisor or borrow a second PCPU from the hypervisor based on a quantity of PCPUs allocated by the hypervisor to the first virtual machine and the first load status, where the M PCPUs include the first PCPU and the second PCPU.

With reference to the third aspect, in some implementations of the third aspect, the first virtual machine is further configured to: before lending the first PCPU to the hypervisor or borrowing the second PCPU from the hypervisor, send first request information to the hypervisor, where the first request information is used to request information about the quantity of PCPUs allocated by the hypervisor to the first virtual machine; and the first virtual machine is further configured to receive first response information sent by the hypervisor for the first request information, where the first response information indicates the information about the quantity.

With reference to the third aspect, in some implementations of the third aspect, the quantity of PCPUs allocated by the hypervisor to the first virtual machine is N, where N is a positive integer, and N is less than or equal to M; and the first virtual machine is configured to lend at least a part of N-L PCPUs to the hypervisor when the first load status indicates that a quantity L of VCPUs that run tasks and that are in the M VCPUs on the first virtual machine is less than N, where L is a positive integer.

With reference to the third aspect, in some implementations of the third aspect, the plurality of virtual machines include a second virtual machine; the second virtual machine is configured to obtain a second load status of M VCPUs on the second virtual machine; the second virtual machine is further configured to send second request information to the hypervisor when the second load status indicates that a quantity of VCPUs that run tasks and that are in the M VCPUs on the second virtual machine is greater than a quantity of PCPUs allocated by the hypervisor to the second virtual machine, where the second request information is used to request to borrow a PCPU from the hypervisor; and the hypervisor is configured to lend at least a part of the N-L PCPUs to the second virtual machine based on the second request information.

With reference to the third aspect, in some implementations of the third aspect, the quantity of PCPUs allocated by the hypervisor to the first virtual machine is R, where R is a positive integer, and R is less than or equal to M; the first virtual machine is configured to send third request information to the hypervisor when the first load status indicates that a quantity L of VCPUs that run tasks and that are in the M VCPUs on the first virtual machine is greater than R, where the third request information is used to request to borrow L-R PCPUs from the hypervisor, and L is a positive integer; and the hypervisor is configured to lend the L-R PCPUs to the first virtual machine based on the third request information.

With reference to the third aspect, in some implementations of the third aspect, the plurality of virtual machines further include a third virtual machine; and the hypervisor is configured to: before lending the L-R PCPUs to the first virtual machine, borrow the L-R PCPUs from the third virtual machine when a minimum quantity of PCPUs required by the third virtual machine is less than a quantity of PCPUs occupied by the third virtual machine.

With reference to the third aspect, in some implementations of the third aspect, the first virtual machine is configured to: unbind a first VCPU from a task run on the first VCPU, where the M VCPUs on the first virtual machine include the first VCPU, and there is a mapping relationship between the first VCPU and the first PCPU; and migrate the task run on the first VCPU to a second VCPU, where the second VCPU is a VCPU other than the first VCPU in the M VCPUs on the first virtual machine.

With reference to the third aspect, in some implementations of the third aspect, the first virtual machine is a virtual machine corresponding to a real-time criticality system.

According to a fourth aspect, a resource scheduling apparatus is provided, where the apparatus is configured to allocate M PCPUs to a plurality of virtual machines, the plurality of virtual machines include a first virtual machine, and the apparatus includes a transceiver unit, configured to obtain first request information from the first virtual machine; and a resource scheduling unit, configured to: when the first request information is used to request to lend the first PCPU to the apparatus, borrow a first PCPU from the first virtual machine; or when the first request information is used to request to borrow a second PCPU from the apparatus, lend a second PCPU to the first virtual machine, where the M PCPUs include the first PCPU and the second PCPU.

With reference to the fourth aspect, in some implementations of the fourth aspect, the transceiver unit is further configured to: before obtaining the first request information from the first virtual machine, obtain second request information from the first virtual machine, where the second request information is used to request information about a quantity of PCPUs allocated by the apparatus to the first virtual machine; and the transceiver unit is configured to send response information for the second request information to the first virtual machine, where the response information includes the information about the quantity of PCPUs allocated by the apparatus to the first virtual machine.

With reference to the fourth aspect, in some implementations of the fourth aspect, the resource scheduling unit is further configured to: before the transceiver unit obtains the first request information from the first virtual machine, allocate N PCPUs to the first virtual machine, where N is a positive integer and N is less than M, and there is a mapping relationship between the N PCPUs and N VCPUs in the M VCPUs on the first virtual machine; and the resource scheduling unit is configured to remove the mapping relationship between the first PCPU and a first VCPU, where the N VCPUs include the first VCPU.

With reference to the fourth aspect, in some implementations of the fourth aspect, the resource scheduling unit is configured to establish a mapping relationship between the second PCPU and a second VCPU, where the M VCPUs include the second VCPU.

With reference to the fourth aspect, in some implementations of the fourth aspect, the resource scheduling unit is configured to: when the first request information is used to request to borrow the second PCPU from the apparatus, determine whether the first virtual machine meets a condition for borrowing a PCPU from the apparatus; and if the condition for borrowing a PCPU from the apparatus is met, lend the second PCPU to the first virtual machine.

With reference to the fourth aspect, in some implementations of the fourth aspect, the resource scheduling unit is configured to: when it is determined that the first virtual machine meets the condition for borrowing a PCPU from the apparatus, and a quantity of third PCPUs available for lending in the apparatus is less than a quantity of second PCPUs, borrow a fourth PCPU from a third virtual machine, where a quantity of fourth PCPUs is obtained by subtracting a quantity of third PCPUs from the quantity of second PCPUs, and the third virtual machine is one or more virtual machines other than the first virtual machine in the plurality of virtual machines.

With reference to the fourth aspect, in some implementations of the fourth aspect, the resource scheduling unit is configured to borrow the fourth PCPU from the third virtual machine when a minimum quantity of PCPUs required by the third virtual machine is less than a quantity of PCPUs occupied by the third virtual machine.

According to a fifth aspect, a resource scheduling apparatus is provided, where the apparatus includes: a memory, configured to store computer instructions; and a processor, configured to execute the computer instructions stored in the memory, so that the apparatus performs the resource scheduling method according to the first aspect or the second aspect.

According to a sixth aspect, an intelligent driving device is provided, where the intelligent driving device includes the resource scheduling apparatus according to any one of the third aspect, the fourth aspect, or the fifth aspect.

With reference to the sixth aspect, in some implementations of the sixth aspect, the intelligent driving device is a vehicle.

According to a seventh aspect, a computer program product is provided, where the computer program product includes computer program code, and when the computer program code is run on a computer, the computer is enabled to perform the resource scheduling method according to the first aspect or the second aspect.

The computer program code may be completely or partially stored in a first storage medium. The first storage medium may be encapsulated with a processor, or encapsulated separately from a processor. This is not specifically limited in embodiments of this application.

According to an eighth aspect, a computer-readable medium is provided, where the computer-readable medium stores program code, and when the computer program code is run on a computer, the computer is enabled to perform the resource scheduling method according to the first aspect or the second aspect.

According to a ninth aspect, an embodiment of this application provides a chip system, where the chip system includes a processor configured to invoke a computer program or computer instructions stored in a memory, so that the processor performs the resource scheduling method according to the first aspect or the second aspect.

With reference to the ninth aspect, in a possible implementation, the processor is coupled to the memory through an interface.

With reference to the ninth aspect, in a possible implementation, the chip system further includes the memory. The memory stores the computer program or the computer instructions.

### BRIEF DESCRIPTION OF DRAWINGS

FIG. 1 is a functional block diagram of an intelligent driving device according to an embodiment of this application;
FIG. 2 is a block diagram of an MCS according to an embodiment of this application;
FIG. 3 is a schematic flowchart of a resource scheduling method according to an embodiment of this application;
FIG. 4 is a diagram of a system architecture according to an embodiment of this application;
FIG. 5 is a diagram of running a task on a PCPU on a virtual machine according to an embodiment of this application;
FIG. 6 is a schematic flowchart of a method for lending a PCPU by a virtual machine 1 to a hypervisor according to an embodiment of this application;
FIG. 7 is a diagram of a system architecture after a virtual machine 1 lends a PCPU 2 to a hypervisor according to an embodiment of this application;
FIG. 8 is a schematic flowchart of a method for borrowing a PCPU from a hypervisor by a virtual machine 2 according to an embodiment of this application;
FIG. 9 is a diagram of a system architecture after a virtual machine 2 borrows a PCPU 2 from a hypervisor according to an embodiment of this application;
FIG. 10 is a schematic flowchart of a method for borrowing a PCPU from a hypervisor by a virtual machine 1 according to an embodiment of this application;
FIG. 11 shows a process in which a virtual machine 1 lends a PCPU 2 to a hypervisor and a virtual machine 2 borrows the PCPU 2 from the hypervisor according to an embodiment of this application; and
FIG. 12 is a block diagram of a resource scheduling apparatus according to an embodiment of this application.

### DESCRIPTION OF EMBODIMENTS

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation. In addition, in the descriptions of embodiments, unless otherwise specified, "a plurality of" means two or more.

Before the technical solutions in embodiments of this application are described, technical terms in embodiments of this application are first described.

Mixed criticality system: A system includes computer hardware and software and can perform a plurality of systems of different task types, such as safety-critical tasks and non-safety-critical tasks, or tasks of different safety integrity levels (safety integrity level, SIL). Different critical applications in the MCS are designed with different assurance levels. High-critical applications have the highest design and verification costs. These types of systems are usually embedded in machines (for example, an aircraft and a vehicle) that need to be secured.

Virtual machine: A virtual instance of a computer can perform almost the same functions as the computer, including running an application and an operating system. The virtual machine is run on a physical machine and accesses computing resources through a hypervisor. The hypervisor abstracts the resources of the physical machine into a resource pool that can be pre-allocated and distributed on demand, so that a plurality of virtual machines can be run on the same physical machine.

Hypervisor: The hypervisor is a virtual machine management program, also referred to as a virtual machine monitor (virtual machine monitor, VMM) or a hypervisor (Hypervisor), which is software for creating and running a virtual machine. The hypervisor allows a host computer to virtually share resources (such as memory and processing) of the host computer to support a plurality of guest virtual machines.

The following describes technical solutions in embodiments of this application with reference to accompanying drawings in embodiments of this application.

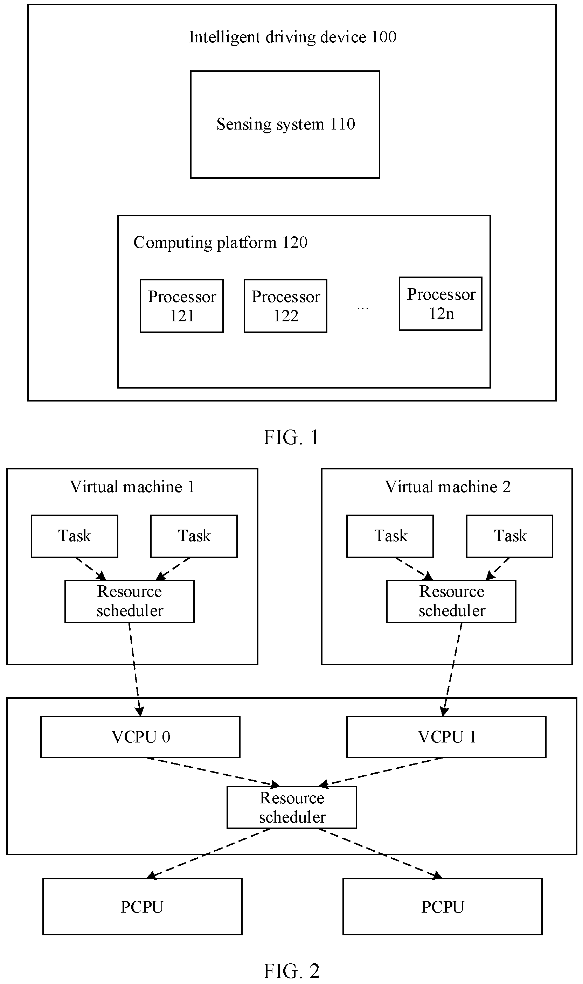

FIG. 1 is a functional block diagram of an intelligent driving device 100 according to an embodiment of this application. The intelligent driving device 100 may include a sensing system 110 and a computing platform 120. The sensing system 110 may include one or more sensors that sense information about an ambient environment of the intelligent driving device 100. For example, the sensing system 110 may include a positioning system. The positioning system may be a global positioning system (global positioning system, GPS), a BeiDou system, or another positioning system. The sensing system 110 may further include one or more of the following: an inertial measurement unit (inertial measurement unit, IMU), a lidar, a millimeter-wave radar, an ultrasonic radar, and an image shooting apparatus.

Some or all functions of the intelligent driving device 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

FIG. 2 is a block diagram of an MCS according to an embodiment of this application. As shown in FIG. 2, the MCS includes a virtual machine 1, a virtual machine 2, a hypervisor, and hardware. For example, the virtual machine 1 may be a virtual machine corresponding to a real-time criticality system, and the virtual machine 2 may be a virtual machine corresponding to a non-real-time criticality system (for example, a vehicle entertainment system). The hardware has a plurality of PCPUs and provides a hardware virtualization capability. Based on the hardware, the hypervisor may provide a virtualization management service, and is configured to: load, start, and manage the virtual machine 1 and the virtual machine 2. The hypervisor may allocate the PCPUs to the virtual machine 1 and the virtual machine 2, and the virtual machine 1 and the virtual machine 2 separately allocate VCPUs to tasks. A resource scheduler in the virtual machine is configured to run a task on a VCPU. A resource scheduler in the hypervisor is configured to map a VCPU to a PCPU.

The MCS may be located on the computing platform 120 in FIG. 1.

Currently, the hypervisor may allocate the PCPUs to the virtual machines in a ratio of 1:1. For example, a PCPU 1 is allocated to the virtual machine 1, and a PCPU 2 is allocated to the virtual machine 2. In this way, both the virtual machines have their own computing resources, which are isolated from each other. In this way, each virtual machine can accurately receive its fair share of PCPU resources. However, in such a resource scheduling mode, resources need to be strictly calculated to ensure proper resource allocation. Otherwise, resource utilization is low. For example, the hypervisor may use a maximum quantity of resources to meet a worst case of the virtual machine 1, to ensure overall determinism and real-time performance of the real-time criticality system. However, in most scenarios, these resources may be excessive, resulting in low resource utilization.

Embodiments of this application provide a resource scheduling method. A virtual machine may lend a PCPU to a hypervisor or borrow a PCPU from the hypervisor based on a load status of a VCPU and a quantity of PCPUs allocated by the hypervisor to a first virtual machine, to help improve utilization of computing resources.

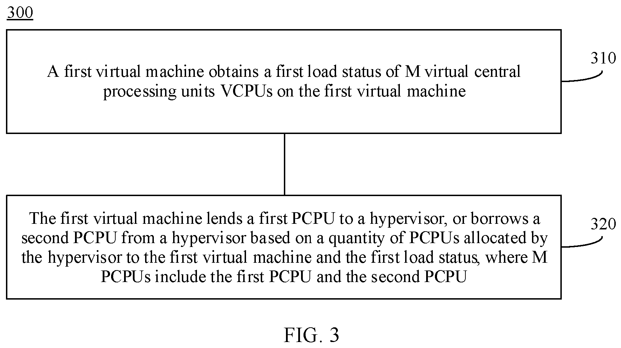

FIG. 3 is a schematic flowchart of a resource scheduling method 300 according to an embodiment of this application. The method 300 may be applied to an apparatus including a plurality of virtual machines and a hypervisor. The hypervisor is configured to allocate M physical central processing units PCPUs to the plurality of virtual machines, M is a positive integer, the plurality of virtual machines include a first virtual machine, and the method 300 includes the following steps.

S310: The first virtual machine obtains a first load status of M virtual central processing units VCPUs on the first virtual machine.

The hypervisor may allocate the M PCPUs to the first virtual machine and a second virtual machine, and may separately present the M VCPUs to the first virtual machine and the second virtual machine, that is, the PCPUs and the VCPUs are mapped, in a ratio of 1:1, to each virtual machine. For example, in an initial state, a quantity of PCPUs allocated by the hypervisor to the first virtual machine is N, and a quantity of PCPUs allocated by the hypervisor to the second virtual machine is M-N, where N is less than or equal to M, and N is a positive integer. For a virtual machine, a total quantity of VCPUs instead of a quantity of PCPUs allocated by the hypervisor to the virtual machine is displayed to the virtual machine. The M VCPUs are displayed to both the first virtual machine and the second virtual machine.

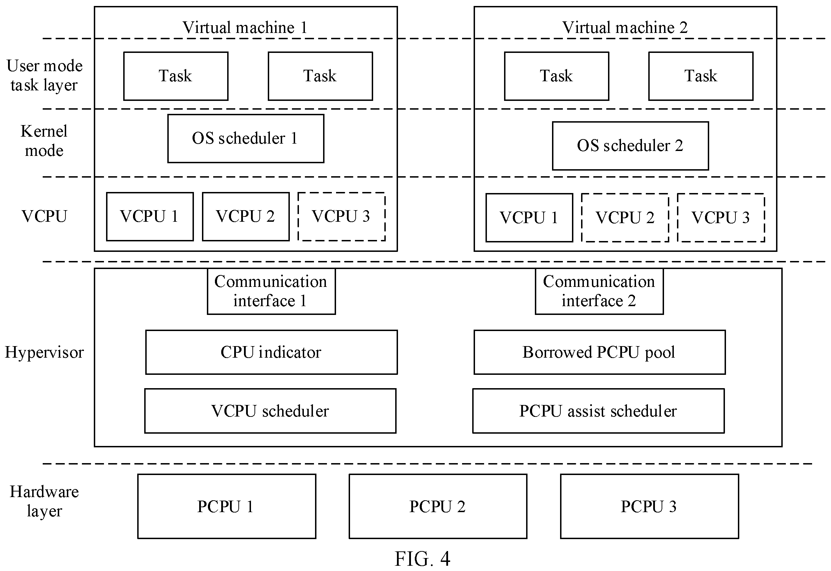

For example, FIG. 4 is a diagram of a system architecture according to an embodiment of this application. As shown in FIG. 4, the system architecture includes a virtual machine 1, a virtual machine 2, the hypervisor, and hardware. The virtual machine 1 may include a user mode task layer, a virtual machine kernel mode, and a VCPU 1, a VCPU 2, and a VCPU 3 that are allocated by the kernel mode. The virtual machine kernel mode includes an operating system scheduler (operating system scheduler, OS scheduler) 1. The virtual machine 2 may include a user mode task layer, a virtual machine kernel mode, and a VCPU 1, a VCPU 2, and a VCPU 3 that are allocated by the kernel mode. The virtual machine kernel mode includes an OS scheduler 2. An OS scheduler in each virtual machine may be configured to determine a load status of M VCPUs on each virtual machine.

The hypervisor includes a CPU indicator (CPU indicator), a borrowed PCPU pool (borrowed PCPU pool), a VCPU scheduler (VCPU scheduler), and a PCPU assist scheduler (PCPU assist scheduler). The CPU indicator is configured to inform a virtual machine of a quantity of PCPUs allocated to the virtual machine. The borrowed PCPU pool may manage a PCPU borrowed from the virtual machine. The VCPU scheduler includes a run queue (run queue), and is configured to schedule running of a VCPU on a PCPU. The PCPU assist scheduler may actively steal a PCPU from another virtual machine when a virtual machine requests to borrow a PCPU and there is no enough PCPU in the borrowed PCPU pool.

The hardware includes a PCPU 1, a PCPU 2, and a PCPU 3. The PCPU 1, the PCPU 2, and the PCPU 3 may be statically allocated by the hypervisor. For example, in the initial state, the VCPU scheduler may allocate the PCPU 1 and the PCPU 2 to the virtual machine 1, and allocate the PCPU 3 to the virtual machine 2. The VCPU scheduler may map the VCPU 1 on the virtual machine 1 to the PCPU 1 and map the VCPU 2 to the PCPU 2. Because the VCPU 3 is not mapped to a PCPU, the VCPU 3 is displayed in a dashed line. The VCPU scheduler may map the VCPU 3 on the virtual machine 2 to the PCPU 3. Because the VCPU 1 and the VCPU 2 are not mapped to PCPUs, the VCPU 1 and the VCPU 2 are displayed in dashed lines.

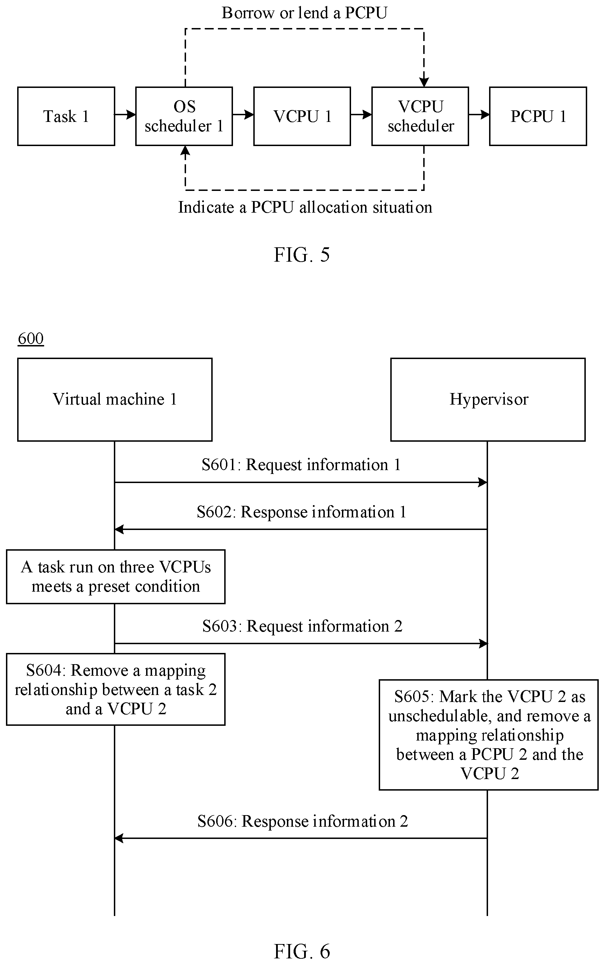

FIG. 5 is a diagram of running a task on a PCPU on a virtual machine according to an embodiment of this application. As shown in FIG. 5, a task 1 in the virtual machine 1 is used as an example. The OS scheduler 1 may establish a mapping relationship between the task 1 and the VCPU 1. When the task 1 needs to be run, the OS scheduler 1 may run the task 1 on the VCPU 1 based on the mapping relationship. Because the VCPU scheduler has mapped the VCPU 1 to the PCPU 1, the task 1 may finally be run on the PCPU 1.

For example, the virtual machine 1 may be a virtual machine corresponding to a real-time criticality system, and the virtual machine 2 may be a virtual machine corresponding to a non-real-time criticality system.

The foregoing is described by using an example in which the system includes two virtual machines. A quantity of virtual machines is not specifically limited in embodiments of this application. For example, three or more virtual machines may be further included.

S320: The first virtual machine lends a first PCPU to the hypervisor or borrows a second PCPU from the hypervisor based on the quantity of PCPUs allocated by the hypervisor to the first virtual machine and the first load status, where the M PCPUs include the first PCPU and the second PCPU.

Optionally, before lending the first PCPU to the hypervisor or borrowing the second PCPU from the hypervisor, the method 300 further includes: The first virtual machine sends first request information to the hypervisor, where the first request information is used to request information about the quantity of PCPUs allocated by the hypervisor to the first virtual machine; and the first virtual machine receives first response information sent by the hypervisor for the first request information, where the first response information indicates the information about the quantity.

For example, as shown in FIG. 4, a communication interface 1 is further included between the hypervisor and the virtual machine, and is used for communication between the hypervisor and the virtual machine. For example, the hypervisor may provide an application programming interface (application programming interface, API), and the virtual machine 1 may send request information to the hypervisor through the API. The request information is used to request information about a quantity of PCPUs allocated by the hypervisor to the virtual machine 1. After receiving the request information, the hypervisor may determine, through the VCPU scheduler, the quantity of PCPUs allocated to the virtual machine 1. Therefore, the CPU indicator may send, to the virtual machine 1 through the API, the information about the quantity of PCPUs allocated to the virtual machine 1.

For example, the CPU indicator may return a bitmap (for example, the bitmap may be vm_cpu_aff) to the virtual machine 1. The bitmap may describe a PCPU by bit. For example, vm_cpu_aff being 0x110 indicates that a 1^{st} PCPU and a 2^{nd} PCPU, namely, the PCPU 1 and the PCPU 2, are allocated. When the OS scheduler 1 receives vm_cpu_aff, it may be determined that the hypervisor allocates the PCPU 1 and the PCPU 2 to the virtual machine 1.

Optionally, the quantity of PCPUs allocated by the hypervisor to the first virtual machine is N, where N is a positive integer, and N is less than or equal to M. That the first virtual machine lends the first PCPU to the hypervisor or borrows the second PCPU from the hypervisor based on the quantity of PCPUs allocated by the hypervisor to the first virtual machine and the first load status includes: The first virtual machine lends at least a part of N-L PCPUs to the hypervisor when the first load status indicates that a quantity L of VCPUs that run tasks and that are in the M VCPUs on the first virtual machine is less than N, where L is a positive integer.

For example, as shown in FIG. 4, a communication interface 2 is further included between the hypervisor and the virtual machine, and is used for communication between the hypervisor and the virtual machine. For example, the hypervisor may provide an API, and the virtual machine 1 may send request information to the hypervisor through the API. The request information is used to request to lend a PCPU to the hypervisor.

The communication interface 1 and the communication interface 2 may be different communication interfaces, or may be a same communication interface. This is not specifically limited in embodiments of this application.

As described above, at an initial moment, the hypervisor allocates two PCPUs to the virtual machine 1. If the task 1 and a task 2 are run on the virtual machine 1, the task 1 is run on the VCPU 1, and the task 2 is run on the VCPU 2, the quantity of PCPUs allocated to the virtual machine 1 is the same as a quantity of VCPUs that run tasks and that are in the three VCPUs on the virtual machine 1. This can ensure running of the task 1 and the task 2 on the virtual machine 1. After a period of time, the virtual machine 1 needs to run the task 1 and does not need to run the task 2. In this case, the task 1 on the virtual machine 1 is run on the VCPU 1, and no task is run on the VCPU 2.

For example, the virtual machine 1 is the virtual machine corresponding to the real-time criticality system. When the real-time criticality system is in a scenario (for example, parking or a rural road) that does not have a high requirement on computing resources, resources do not need to continue to be occupied, and some tasks are ended and occupy no PCPU. In this case, the OS scheduler 1 may request to lend a PCPU to the hypervisor.

FIG. 6 is a schematic flowchart of a method 600 for lending a PCPU by a virtual machine 1 to a hypervisor according to an embodiment of this application. As shown in FIG. 6, the method 600 includes the following steps.

S601: The virtual machine 1 sends request information 1 to the hypervisor, where the request information 1 is used to request information about a quantity of PCPUs allocated by the hypervisor to the virtual machine 1.

The foregoing first request information may be the request information 1.

For example, the virtual machine 1 may query, through the foregoing communication interface 1, the hypervisor for the information about the quantity of PCPUs allocated to the virtual machine 1. Specifically, an OS scheduler 1 may query, through the communication interface 1, the hypervisor for the information about the quantity of PCPUs allocated to the virtual machine 1.

S602: The hypervisor sends response information 1 to the virtual machine 1, where the response information 1 includes the information about the quantity of PCPUs allocated by the hypervisor to the virtual machine 1.

For example, after receiving the request information 1, the VCPU scheduler may determine information about a PCPU allocated to the virtual machine 1. Then, the response information 1 is sent to the OS scheduler 1 through a CPU indicator, where the response information 1 includes the information about the quantity of PCPUs allocated by the hypervisor to the virtual machine 1. For example, the CPU indicator may send vm_cpu_aff to the OS scheduler 1. For example, vm_cpu_aff being 0x110 indicates that a 1^{st} PCPU and a 2^{nd} PCPU, namely, a PCPU 1 and a PCPU 2, are allocated. When the OS scheduler 1 receives vm_cpu_aff, it may be determined that the hypervisor allocates the PCPU 1 and the PCPU 2 to the virtual machine 1.

S601 and S602 are described by using an example in which the virtual machine 1 sends the request information 1 to the hypervisor, to learn, based on the response information 1 sent by the hypervisor, the quantity of PCPUs allocated to the virtual machine 1. Embodiments of this application are not limited thereto. For example, in an initial state, the virtual machine 1 may alternatively pre-store the information about the quantity of PCPUs allocated by the hypervisor to the virtual machine 1.

S603: When a task run on three VCPUs on the virtual machine 1 meets a preset condition, the virtual machine 1 may send request information 2 to the hypervisor, where the request information 2 may be used to request to lend a PCPU to the hypervisor.

In an embodiment, the preset condition may include that a quantity of VCPUs that run tasks and that are in the three VCPUs on the virtual machine 1 is less than 2.

For example, when determining that running of a task 2 on a VCPU 2 stops, the OS scheduler 1 may determine that in this case, in the three VCPUs, only the VCPU 1 runs a task, and the VCPU 2 and the VCPU 3 do not run tasks. However, the hypervisor allocates the PCPU 1 and the PCPU 2 to the virtual machine 1. In this case, the OS scheduler 1 may determine that computing resources allocated to the virtual machine 1 are excessive. The OS scheduler 1 may send the request information 2 to the VCPU scheduler through the foregoing communication interface 2, where the request information 2 may be used to request to lend the PCPU to the hypervisor.

The virtual machine 1 may send the request information 2 to the hypervisor, to request to lend the PCPU to the hypervisor. When receiving the request information 2, the hypervisor may learn, based on a running status of a task in a run queue of a PCPU corresponding to a VCPU on the virtual machine 1, that a PCPU that the virtual machine 1 expects to lend is the PCPU 2.

In an embodiment, the preset condition may further include that a task 1 is run on the VCPU 1 on the virtual machine 1 and CPU usage of the VCPU 1 is greater than a preset threshold, and the task 2 is run on the VCPU 2 and CPU usage of the VCPU 2 is less than or equal to the preset threshold.

For example, the preset threshold is 70%.

S604: The virtual machine 1 may remove a mapping relationship between the task 2 and the VCPU 2.

For example, when determining to lend the PCPU 2 to the hypervisor, the OS scheduler 1 may unbind the VCPU 2 from the task 2, or remove the mapping relationship between the task 2 and the VCPU 2.

In an embodiment, if the task 1 is run on the VCPU 1 on the virtual machine 1 and CPU usage of the VCPU 1 is greater than the preset threshold, and the task 2 is run on the VCPU 2 and CPU usage of the VCPU 2 is less than or equal to the preset threshold, the method 600 further includes: migrating the task run on the VCPU 2 to the VCPU 1.

In this embodiment of this application, when the PCPU is lent, the PCPU does not need to be called to stop or called back, and a kernel thread run on the PCPU does not need to be ended. Instead, only a task on a VCPU corresponding to the PCPU needs to be handed over, which is similar to perform internal freezing on the VCPU, and the related lent PCPU may be scheduled by the hypervisor.

There is no actual sequence between S603 and S604.

S605: When receiving the request information 2, the hypervisor may mark the VCPU 2 as unschedulable, and remove the mapping relationship between the PCPU 2 and the VCPU 2.

For example, when receiving the request information 2, the VCPU scheduler may mark the VCPU 2 as unschedulable, and remove the mapping relationship between the PCPU 2 and the VCPU 2. In this way, the task of the VCPU 2 may not be run in a run queue of the corresponding PCPU 2.

S606: The hypervisor sends response information 2 to the virtual machine 1, where the response information 2 indicates that the virtual machine 1 successfully lends the PCPU to the hypervisor.

In an embodiment, the response information 2 includes the information about the quantity of PCPUs allocated by the hypervisor to the virtual machine 1.

For example, after receiving the request information 2, the VCPU scheduler may remove the mapping relationship between the PCPU 2 and the VCPU 2. In this case, there is only a mapping relationship between the PCPU 1 and the VCPU 1. The CPU indicator may send, to the OS scheduler 1, the information about the quantity of PCPUs allocated by the hypervisor to the virtual machine 1. For example, the CPU indicator may send vm_cpu_aff to the OS scheduler 1. For example, vm_cpu_aff being 0x100 indicates that the 1^{st} PCPU, namely, the PCPU 1, is allocated. When the OS scheduler 1 receives vm_cpu_aff, it may be determined that the PCPU is successfully lent to the hypervisor.

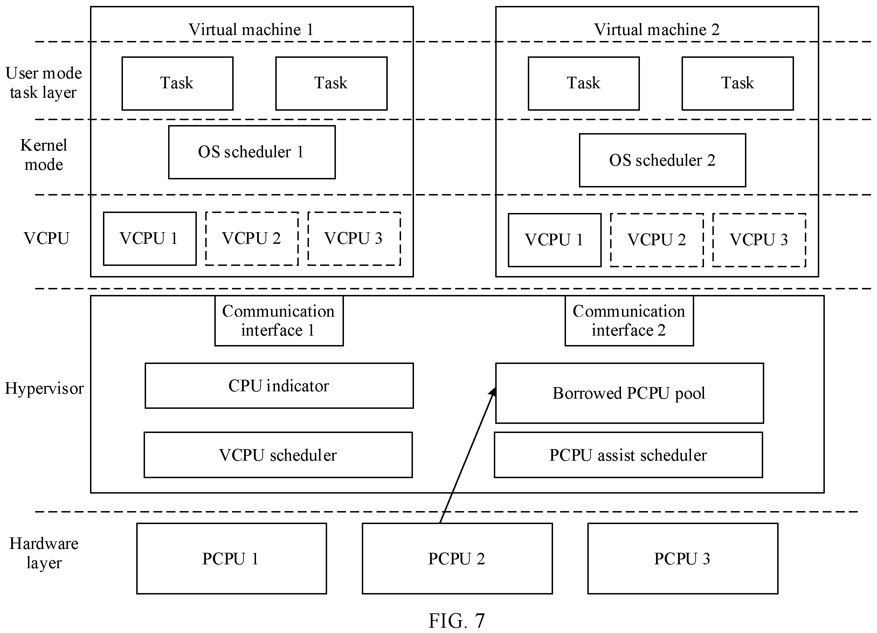

FIG. 7 is a diagram of a system architecture after a virtual machine 1 lends a PCPU 2 to a hypervisor according to an embodiment of this application. It can be learned that, a PCPU currently available for lending in a borrowed PCPU pool is the PCPU 2. The VCPU 2 on the virtual machine 1 changing from a solid line to a dashed line indicates that the VCPU 2 is not mapped to the PCPU.

Optionally, a plurality of virtual machines include a second virtual machine, and the method 300 further includes: The second virtual machine obtains a second load status of M VCPUs on the second virtual machine; the second virtual machine sends second request information to the hypervisor when the second load status indicates that a quantity of VCPUs that run tasks and that are in the M VCPUs on the second virtual machine is greater than a quantity of PCPUs allocated by the hypervisor to the second virtual machine, where the second request information is used to request to borrow a PCPU from the hypervisor; and the hypervisor lends at least a part of N-L PCPUs to the second virtual machine based on the second request information.

For example, the second virtual machine may be the foregoing virtual machine 2.

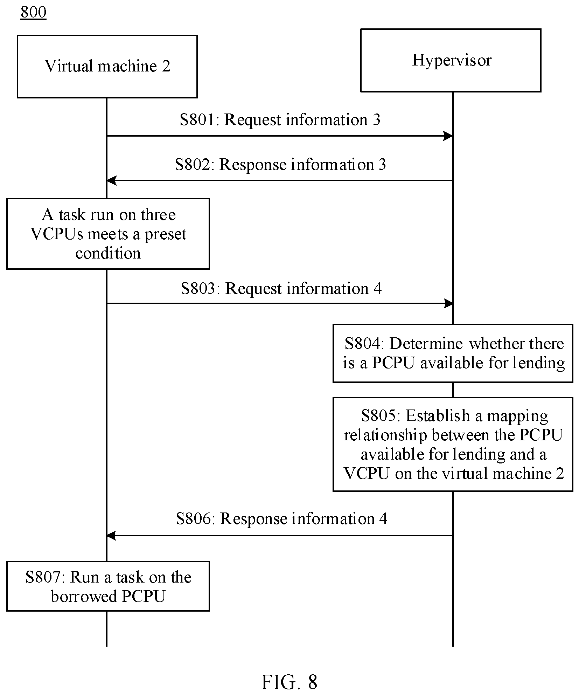

FIG. 8 is a schematic flowchart of a method 800 for borrowing a PCPU from a hypervisor by a virtual machine 2 according to an embodiment of this application. As shown in FIG. 8, the method 800 includes the following steps.

S801: The virtual machine 2 sends request information 3 to the hypervisor, where the request information 3 is used to request information about a quantity of PCPUs allocated by the hypervisor to the virtual machine 2.

For example, the virtual machine 2 may query, through the foregoing communication interface 1, the hypervisor for the information about the quantity of PCPUs allocated to the virtual machine 2. Specifically, an OS scheduler 2 may query, through the communication interface 1, the hypervisor for the information about the quantity of PCPUs allocated to the virtual machine 2.

S802: The hypervisor sends response information 3 to the virtual machine 2, where the response information 3 includes the information about the quantity of PCPUs allocated by the hypervisor to the virtual machine 2.

For example, after receiving the request information 3, the VCPU scheduler may determine information about a PCPU allocated to the virtual machine 2. Therefore, the information about the quantity of PCPUs allocated by the hypervisor to the virtual machine 2 may be sent to the OS scheduler 2 through a CPU indicator. For example, the CPU indicator may send vm_cpu_aff to the OS scheduler 2. For example, vm_cpu_aff being 0x001 indicates that a 3^{rd} PCPU, namely, a PCPU 3, is allocated. When the OS scheduler 2 receives vm_cpu_aff, it may be determined that the hypervisor allocates the PCPU 3 to the virtual machine 2.

S803: When a task run on three VCPUs on the virtual machine 2 meets a preset condition, the virtual machine 2 sends request information 4 to the hypervisor, where the request information 4 is used to request to borrow a PCPU from the hypervisor.

The foregoing second request information may be the request information 4.

In an embodiment, the request information 4 may further include information about a quantity of PCPUs requested to borrow from the hypervisor.

In an embodiment, the preset condition includes that a quantity of VCPUs that run tasks and that are in the three VCPUs on the virtual machine 2 is greater than the quantity of PCPUs allocated by the hypervisor to the second virtual machine.

For example, there is a mapping relationship between a task 3 and a VCPU 3. In an initial state, the OS scheduler 2 determines that only the task 3 is run on the VCPU 3. In this case, only the VCPU 3 runs the task in the three VCPUs. However, the hypervisor allocates the PCPU 3 to the virtual machine 2. In this case, the OS scheduler 2 may determine that computing resources allocated to the virtual machine 2 can ensure running of the task 3.

At a moment, when the OS scheduler 2 determines that both the task 3 and a task 4 need to be run, the task 4 may be run on the VCPU 2. Because the quantity of VCPUs that run tasks and that are in the three VCPUs is greater than the quantity of PCPUs allocated to the virtual machine 2, the OS scheduler 2 may send the request information 4 to the VCPU scheduler through the foregoing communication interface 2, where the request information 4 may be used to request to borrow the PCPU from the hypervisor.

S804: After receiving the request information 4, the hypervisor determines whether there is a PCPU available for lending.

For example, the VCPU scheduler may query whether there is a PCPU available for lending in a borrowed PCPU pool. If there is no PCPU available for lending, the VCPU scheduler may suspend the VCPU 2 on the virtual machine 2; otherwise, S805 is performed.

S805: If there is a PCPU available for lending, the hypervisor establishes a mapping relationship between the PCPU available for lending and a VCPU on the virtual machine 2.

For example, if there is a PCPU available for lending (for example, the PCPU 2 borrowed from the virtual machine 1 in the method 600), the VCPU scheduler may map the VCPU 2 on the virtual machine 2 to the PCPU 2.

S806: The hypervisor sends response information 4 to the virtual machine 2, where the response information 4 indicates that the virtual machine 2 successfully borrows the PCPU from the hypervisor.

In an embodiment, the response information 4 may include the information about the quantity of PCPUs allocated by the hypervisor to the virtual machine 2.

For example, the CPU indicator may send vm_cpu_aff to the OS scheduler 2. For example, vm_cpu_aff being 0x011 indicates that a 2^{nd} PCPU and the 3^{rd} PCPU, namely, the PCPU 2 and the PCPU 3, are allocated. When the OS scheduler 2 receives vm_cpu_aff, it may be determined that the virtual machine 2 successfully borrows the PCPU from the hypervisor.

S807: The virtual machine 2 runs the task on the borrowed PCPU.

For example, the OS scheduler 2 may establish a mapping relationship between the task 4 and the VCPU 2 by using a CPU core affinity means. In this way, the task 4 is run on the PCPU 2 corresponding to the VCPU 2.

In an embodiment, the hypervisor may lend the PCPU 2 to the virtual machine 2 within preset duration. When the preset duration ends, the VCPU scheduler may notify the virtual machine 2 that the borrowed PCPU 2 is taken back, so that the quantity of PCPUs allocated to the virtual machine 2 is restored to an initial state.

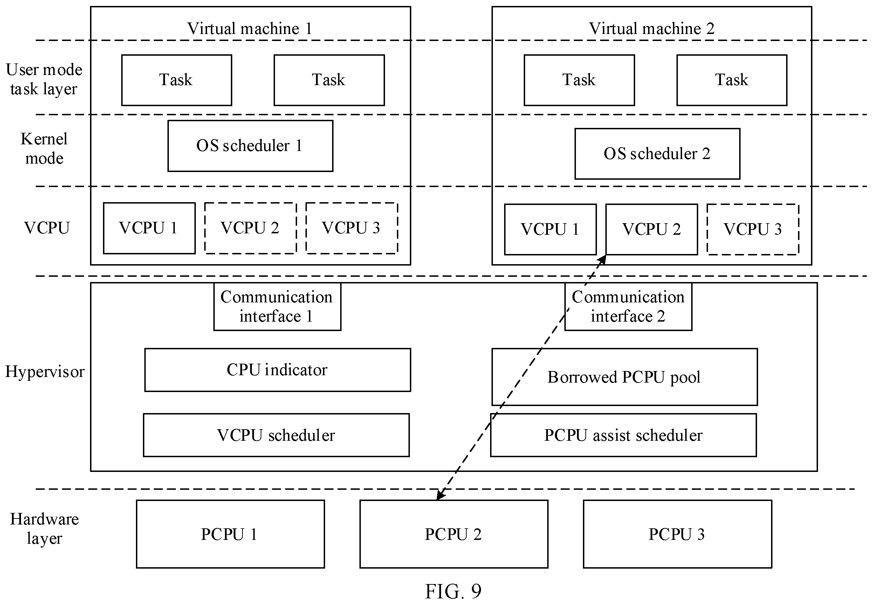

FIG. 9 is a diagram of a system architecture after a virtual machine 2 borrows a PCPU 2 from a hypervisor according to an embodiment of this application. It can be learned that the VCPU 2 on the virtual machine 2 changing from a dashed line to a solid line indicates that a mapping relationship is established between the PCPU 2 in the borrowed PCPU pool and the VCPU 2 on the virtual machine 2.

Optionally, a quantity of PCPUs allocated by the hypervisor to a first virtual machine is R, where R is a positive integer, and R is less than or equal to M. That the first virtual machine lends a first PCPU to the hypervisor or borrows a second PCPU from the hypervisor based on the quantity allocated by the hypervisor to the first virtual machine and a first load status includes: The first virtual machine sends third request information to the hypervisor when the first load status indicates that a quantity L of VCPUs that run tasks and that are in M VCPUs on the first virtual machine is greater than R, where the third request information is used to request to borrow L-R PCPUs from the hypervisor, and L is a positive integer. The method further includes: The hypervisor lends the L-R PCPUs to the first virtual machine based on the third request information.

For the foregoing process in which the first virtual machine borrows the L-R PCPUs from the hypervisor, refer to the foregoing process in which the second virtual machine borrows the PCPU from the hypervisor.

Optionally, a plurality of virtual machines further include a third virtual machine, and before lending the L-R PCPUs to the first virtual machine, the method further includes: The hypervisor borrows the L-R PCPUs from the third virtual machine when a minimum quantity of PCPUs required by the third virtual machine is less than a quantity of PCPUs occupied by the third virtual machine.

For example, the first virtual machine is a virtual machine corresponding to a real-time criticality system. When the first virtual machine requests to borrow a PCPU from the hypervisor, if there is a PCPU available for lending in the hypervisor and a quantity of PCPUs available for lending is enough, the hypervisor may lend a corresponding PCPU to the first virtual machine; or if there is no PCPU available for lending in the hypervisor, or if there is a PCPU available for lending in the hypervisor but a quantity of PCPUs available for lending is not enough, to ensure real-time running of a task on the first virtual machine, the hypervisor may actively steal a PCPU from the third virtual machine corresponding to a non-real-time criticality system, to lend, to the first virtual machine, the PCPU that meets a requirement of the first virtual machine.

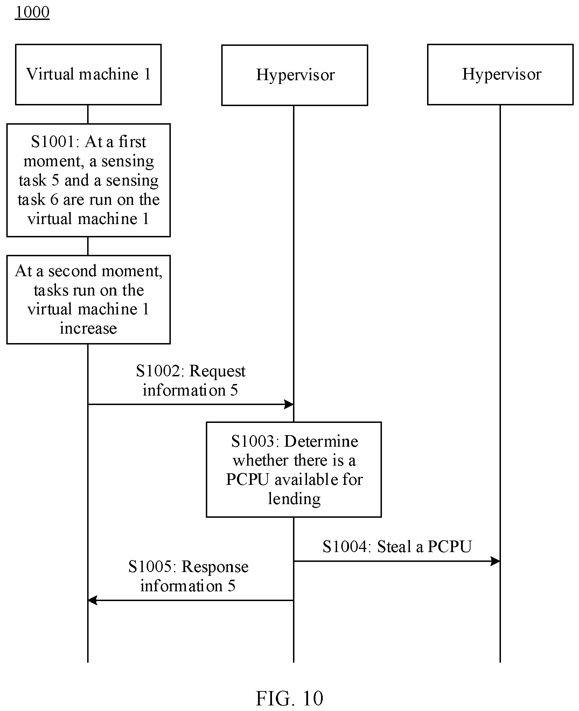

FIG. 10 is a schematic flowchart of a method 1000 for borrowing a PCPU from a hypervisor by a virtual machine 1 according to an embodiment of this application. As shown in FIG. 10, the method 1000 includes the following steps.

S1001: At a first moment, a sensing task 5 and a sensing task 6 are run on the virtual machine 1, where the sensing task 5 is run on a VCPU 1, and the sensing task 6 is run on a VCPU 2.

The hypervisor may allocate two PCPUs, for example, a PCPU 1 and a PCPU 2, to the virtual machine 1. The PCPU 1 has a mapping relationship with the VCPU 1, and the PCPU 2 has a mapping relationship with the VCPU 2. In this case, at the first moment, the sensing task 5 may be finally run on the PCPU 1, and the sensing task 6 is finally run on the PCPU 2. In this case, computing resources allocated by the hypervisor to the virtual machine 1 can ensure running of a task on the virtual machine 1.

S1002: At a second moment, tasks run on the virtual machine 1 increase, and the virtual machine 1 may send request information 5 to the hypervisor, where the request information is used to request to borrow a PCPU from the hypervisor.

The foregoing third request information may be the request information 5.

For example, in a night scenario, it is physically difficult to recognize a vehicle. To ensure driving safety of the vehicle, an enhanced sensing task 7 needs to be added to the virtual machine 1.

When an OS scheduler 1 determines that the enhanced sensing task 7 needs to be run, the enhanced sensing task 7 may be run on a VCPU 3. Because a quantity of VCPUs that run tasks and that are in three VCPUs is greater than a quantity of PCPUs allocated to a virtual machine 2, the OS scheduler 1 may send the request information 5 to the VCPU scheduler through the foregoing communication interface 2, where the request information 5 may be used to request to borrow the PCPU from the hypervisor.

The enhanced sensing task 7 may be a task that needs to occupy all the PCPU.

In an embodiment, the request information 5 may further include information about a quantity of PCPUs requested to borrow from the hypervisor.

S1003: After receiving the request information 5, the hypervisor determines whether there is a PCPU available for lending.

For example, the VCPU scheduler may query whether there is a PCPU available for lending in a borrowed PCPU pool. If there is a PCPU available for lending and a quantity of PCPUs available for lending is enough, the VCPU scheduler may lend a PCPU to the virtual machine 1; or if there is no PCPU available for lending or the quantity of PCPUs available for lending is less than a quantity of PCPUs that the virtual machine 1 expects to borrow, S1004 is performed.

S1004: If there is no PCPU available for lending or the quantity of PCPUs available for lending is less than the quantity of PCPUs that the virtual machine 1 expects to borrow, the hypervisor may steal a PCPU from a virtual machine (for example, the virtual machine 2) other than the virtual machine 1.

In an embodiment, the hypervisor may steal a PCPU from a virtual machine that meets a condition.

For example, when the VCPU scheduler determines that there is no PCPU available for lending in the borrowed PCPU pool or the quantity of PCPUs available for lending is less than the quantity of PCPUs that the virtual machine 1 expects to borrow, a PCPU assist scheduler may be notified to actively steal a PCPU from another virtual machine.

For example, each virtual machine may be configured with a minimum quantity of required PCPUs and whether the virtual machine is a critical virtual machine. For example, the virtual machine 1 may be configured as follows:

```
          VM1{
          cpuBudget=1 //minimal CPU requirement is 1
          is Critical=1 //critical vm which is real-time}
```

cpuBudget=1 indicates that the virtual machine 1 needs at least one PCPU, and is Critical=1 indicates that the virtual machine 1 is a virtual machine corresponding to a real-time criticality system.

The virtual machine 2 may be configured as follows:

```
          VM2{
          cpuBudget=0 //minimal CPU requirement is 0
          is Critical=0 //normal vm which is stomped}
```

cpuBudget=0 indicates that the virtual machine 2 needs at least 0 PCPUs, and is Critical=0 indicates that the virtual machine 2 is a virtual machine corresponding to a non-real-time criticality system.

The PCPU assist scheduler determines, based on the foregoing configuration and a quantity of PCPUs allocated to each virtual machine, a virtual machine whose cpuBudget is less than the quantity of allocated PCPUs. For example, if cpuBudget of the virtual machine 2 is 0 and one PCPU (for example, a PCPU 3) is allocated to the virtual machine 2, the PCPU assist scheduler may actively steal the PCPU 3 from the virtual machine 2 and put the PCPU 3 into the borrowed PCPU pool. The borrowed PCPU pool may notify the VCPU scheduler to perform scheduling. The VCPU scheduler may map the VCPU 3 on the virtual machine 1 to the PCPU 3.

S1005: The hypervisor sends response information 5 to the virtual machine 1, where the response information 5 indicates that the virtual machine 1 successfully borrows the PCPU from the hypervisor.

For example, a CPU indicator may send vm_cpu_aff to the OS scheduler 1. For example, vm_cpu_aff being 0x111 indicates that a 1^{st} PCPU, a 2^{nd} PCPU, and a 3^{rd} PCPU, namely, the PCPU 1, the PCPU 2, and the PCPU 3, are allocated. When the OS scheduler 1 receives vm_cpu_aff, it may be determined that the virtual machine 1 successfully borrows the PCPU from the hypervisor.

S1006: The virtual machine 1 runs the enhanced sensing task 7 on the borrowed PCPU.

The foregoing describes a case in which when the virtual machine 1 corresponding to the real-time criticality system requests to borrow a PCPU from the hypervisor, if there is no PCPU available for lending in the hypervisor or the quantity of PCPUs available for lending is less than the quantity of PCPUs that the virtual machine 1 expects to borrow from the hypervisor, the hypervisor may actively steal a PCPU from another virtual machine. Embodiments of this application are not limited thereto. For example, virtual machines (for example, the virtual machine 2 and a virtual machine 3) of the non-real-time criticality system may also have different priorities. For example, a priority of the virtual machine 2 is higher than a priority of the virtual machine 3. When the virtual machine 2 requests to borrow a PCPU from the hypervisor, if there is no PCPU available for lending in the hypervisor or a quantity of PCPUs available for lending is less than a quantity of PCPUs that the virtual machine 2 expects to borrow from the hypervisor, the hypervisor may actively steal a PCPU from the virtual machine 3 with a lower priority, to lend enough PCPUs to the virtual machine 2.

Optionally, lending a first PCPU to the hypervisor includes: A first virtual machine unbinds a first VCPU from a task run on the first VCPU, where M VCPUs on the first virtual machine include the first VCPU, and there is a mapping relationship between the first VCPU and the first PCPU; and the first virtual machine migrates the task run on the first VCPU to a second VCPU, where the second VCPU is a VCPU other than the first VCPU in the M VCPUs on the first virtual machine.

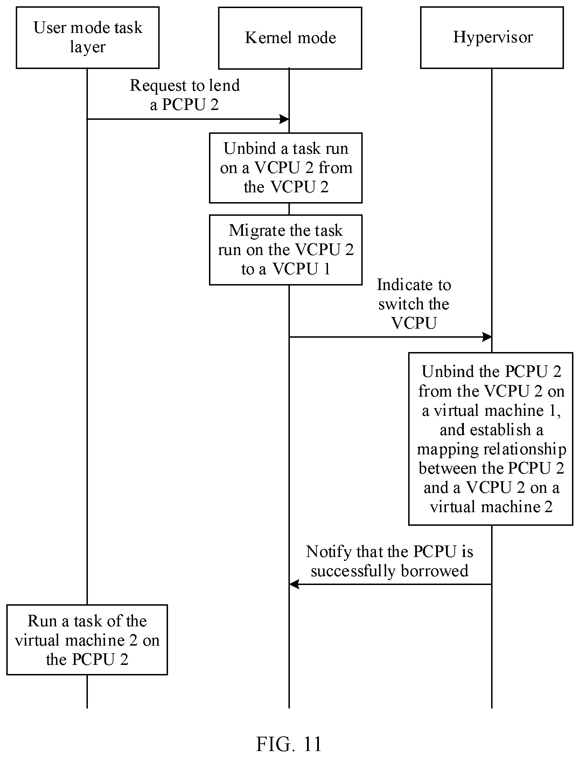

With reference to FIG. 11, the following describes a process in which a virtual machine 1 lends a PCPU 2 to a hypervisor and a virtual machine 2 borrows the PCPU 2 from the hypervisor according to an embodiment of this application. As shown in FIG. 11, a user mode task layer requests a kernel mode to lend the PCPU 2 allocated to the virtual machine 1. This process takes about 200 microseconds (µs). After receiving the request, the kernel mode unbinds, from the VCPU 2, a task run on the VCPU 2 that is on the virtual machine 1 and that has a mapping relationship with the PCPU 2. This process takes about 50 µs. The kernel mode may migrate the task run on the VCPU 2 to the VCPU 1. This process takes about 50 µs. The kernel mode notifies the hypervisor to switch the VCPU. After receiving the notification, the hypervisor unbinds the PCPU 2 from the VCPU 2 on the virtual machine 1, and establishes a mapping relationship between the PCPU 2 and a VCPU 2 on the virtual machine 2. This process takes about 500 µs. The hypervisor notifies the kernel mode that the virtual machine 2 successfully borrows the PCPU. The user mode task layer runs the task of the virtual machine 2 on the PCPU 2. This process takes about 200 µs.

It can be learned from the foregoing descriptions that, in a borrowing and lending process of a PCPU, only simple core affinity and task migration are performed, and there is no additional interrupt migration or kernel thread shutdown overhead. In other words, there is no excessive performance overhead of a kernel in the borrowing and lending process of a PCPU, so that computing resources can be quickly switched in real time.

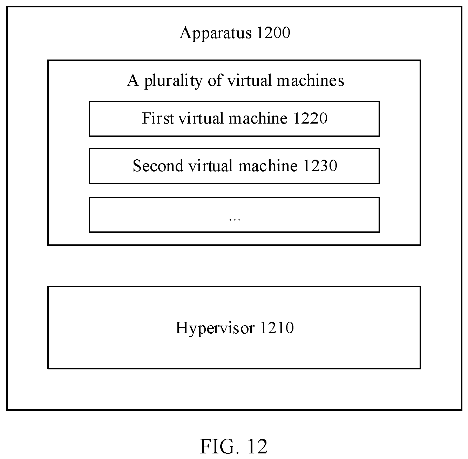

FIG. 12 is a block diagram of a resource scheduling apparatus 1200 according to an embodiment of this application. As shown in FIG. 12, the apparatus 1200 includes a plurality of virtual machines and a hypervisor 1210. The hypervisor 1210 is configured to allocate M physical central processing units PCPUs to the plurality of virtual machines, where M is a positive integer. The plurality of virtual machines include a first virtual machine 1220. The first virtual machine 1220 is configured to obtain a first load status of M virtual central processing units VCPUs on the first virtual machine 1220. The first virtual machine 1220 is further configured to lend a first PCPU to the hypervisor 1210 or borrow a second PCPU from the hypervisor 1210 based on a quantity of PCPUs allocated by the hypervisor 1210 to the first virtual machine 1220 and the first load status, where the M PCPUs include the first PCPU and the second PCPU.

Optionally, the first virtual machine 1220 is further configured to: before lending the first PCPU to the hypervisor 1210 or borrowing the second PCPU from the hypervisor 1210, send first request information to the hypervisor 1210, where the first request information is used to request information about the quantity of PCPUs allocated by the hypervisor 1210 to the first virtual machine 1220. The first virtual machine 1220 is further configured to receive first response information sent by the hypervisor 1210 for the first request information, where the first response information indicates the information about the quantity.

Optionally, the quantity of PCPUs allocated by the hypervisor 1210 to the first virtual machine 1220 is N, where N is a positive integer, and N is less than or equal to M. The first virtual machine 1220 is configured to: lend at least a part of N-L PCPUs to the hypervisor 1210 when the first load status indicates that a quantity L of VCPUs that run tasks and that are in the M VCPUs on the first virtual machine 1220 is less than N, where L is a positive integer.

Optionally, the plurality of virtual machines include a second virtual machine 1230; and the second virtual machine 1230 is configured to obtain a second load status of M VCPUs on the second virtual machine 1230. The second virtual machine 1230 is further configured to send second request information to the hypervisor 1210 when the second load status indicates that a quantity of VCPUs that run the tasks and that are in the M VCPUs on the second virtual machine 1230 is less than a quantity of PCPUs allocated by the hypervisor 1210 to the second virtual machine 1230, where the second request information is used to request to borrow a PCPU from the hypervisor 1210. The hypervisor 1210 is configured to lend at least a part of the N-L PCPUs to the second virtual machine 1230 based on the second request information.

Optionally, the quantity of PCPUs allocated by the hypervisor 1210 to the first virtual machine 1220 is R, where R is a positive integer, and R is less than or equal to M. The first virtual machine 1220 is configured to send third request information to the hypervisor 1210 when the first load status indicates that a quantity L of VCPUs that run tasks and that are in the M VCPUs on the first virtual machine 1220 is greater than R, where the third request information is used to request to borrow L-R PCPUs from the hypervisor 1210, and L is a positive integer. The hypervisor 1210 is configured to lend the L-R PCPUs to the first virtual machine 1220 based on the third request information.

Optionally, the plurality of virtual machines further include a third virtual machine; and the hypervisor 1210 is configured to: before lending the L-R PCPUs to the first virtual machine 1220, borrow the L-R PCPUs from the third virtual machine when a minimum quantity of PCPUs required by the third virtual machine is less than a quantity of PCPUs occupied by the third virtual machine.

Optionally, the first virtual machine 1220 is configured to: unbind a first VCPU from a task run on the first VCPU, where the M VCPUs on the first virtual machine include the first VCPU, and there is a mapping relationship between the first VCPU and the first PCPU; and migrate the task run on the first VCPU to a second VCPU, where the second VCPU is a VCPU other than the first VCPU in the M VCPUs on the first virtual machine 1220.

Optionally, the first virtual machine is a virtual machine corresponding to a real-time criticality system.

A person of ordinary skill in the art may be aware that, with reference to examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and there may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource scheduling method, wherein the method is applied to an apparatus comprising a plurality of virtual machines and a hypervisor, the hypervisor is configured to allocate M physical central processing units PCPUs to the plurality of virtual machines, M is a positive integer, the plurality of virtual machines comprise a first virtual machine, and the method comprises:
obtaining, by the first virtual machine, a first load status of M virtual central processing units VCPUs on the first virtual machine; and
lending, by the first virtual machine, a first PCPU to the hypervisor or borrowing a second PCPU from the hypervisor based on a quantity of PCPUs allocated by the hypervisor to the first virtual machine and the first load status, wherein the M PCPUs comprise the first PCPU and the second PCPU.

2. The method according to claim 1, wherein before lending the first PCPU to the hypervisor or borrowing the second PCPU from the hypervisor, the method further comprises:
sending, by the first virtual machine, first request information to the hypervisor, wherein the first request information is used to request information about the quantity of PCPUs allocated by the hypervisor to the first virtual machine; and
receiving, by the first virtual machine, first response information sent by the hypervisor for the first request information, wherein the first response information indicates the information about the quantity.

3. The method according to claim 1 or 2, wherein the quantity of PCPUs allocated by the hypervisor to the first virtual machine is N, wherein N is a positive integer, and N is less than or equal to M; and
lending, by the first virtual machine, the first PCPU to the hypervisor or borrowing the second PCPU from the hypervisor based on the quantity of PCPUs allocated by the hypervisor to the first virtual machine and the first load status comprises:
lending, by the first virtual machine, at least a part of N-L PCPUs to the hypervisor when the first load status indicates that a quantity L of VCPUs that run tasks and that are in the M VCPUs on the first virtual machine is less than N, wherein L is a positive integer.

4. The method according to claim 3, wherein the plurality of virtual machines comprise a second virtual machine, and the method further comprises:
obtaining, by the second virtual machine, a second load status of M VCPUs on the second virtual machine;
sending, by the second virtual machine, second request information to the hypervisor when the second load status indicates that a quantity of VCPUs that run tasks and that are in the M VCPUs on the second virtual machine is greater than a quantity of PCPUs allocated by the hypervisor to the second virtual machine, wherein the second request information is used to request to borrow a PCPU from the hypervisor; and
lending, by the hypervisor, at least a part of the N-L PCPUs to the second virtual machine based on the second request information.

5. The method according to claim 1 or 2, wherein the quantity of PCPUs allocated by the hypervisor to the first virtual machine is R, wherein R is a positive integer, and R is less than or equal to M;
lending, by the first virtual machine, the first PCPU to the hypervisor or borrowing the second PCPU from the hypervisor based on the quantity allocated by the hypervisor to the first virtual machine and the first load status comprises:
sending, by the first virtual machine, third request information to the hypervisor when the first load status indicates that a quantity L of VCPUs that run tasks and that are in the M VCPUs on the first virtual machine is greater than R, wherein the third request information is used to request to borrow L-R PCPUs from the hypervisor, and L is a positive integer; and
the method further comprises:
lending, by the hypervisor, the L-R PCPUs to the first virtual machine based on the third request information.

6. The method according to claim 5, wherein the plurality of virtual machines further comprise a third virtual machine, and before lending the L-R PCPUs to the first virtual machine, the method further comprises:
borrowing, by the hypervisor, the L-R PCPUs from the third virtual machine when a minimum quantity of PCPUs required by the third virtual machine is less than a quantity of PCPUs occupied by the third virtual machine.

7. The method according to any one of claims 1 to 6, wherein lending the first PCPU to the hypervisor comprises:
unbinding, by the first virtual machine, a first VCPU from a task run on the first VCPU, wherein the M VCPUs on the first virtual machine comprise the first VCPU, and there is a mapping relationship between the first VCPU and the first PCPU; and
migrating, by the first virtual machine, the task run on the first VCPU to a second VCPU, wherein the second VCPU is a VCPU other than the first VCPU in the M VCPUs on the first virtual machine.

8. The method according to any one of claims 1 to 7, wherein the first virtual machine is a virtual machine corresponding to a real-time criticality system.

9. A resource scheduling apparatus, wherein the apparatus comprises a plurality of virtual machines and a hypervisor; the hypervisor is configured to allocate M physical central processing units PCPUs to the plurality of virtual machines, wherein M is a positive integer; the plurality of virtual machines comprise a first virtual machine;
the first virtual machine is configured to obtain a first load status of M virtual central processing units VCPUs on the first virtual machine; and
the first virtual machine is further configured to lend a first PCPU to the hypervisor or borrow a second PCPU from the hypervisor based on a quantity of PCPUs allocated by the hypervisor to the first virtual machine and the first load status, wherein the M PCPUs comprise the first PCPU and the second PCPU.

10. The apparatus according to claim 9, wherein
the first virtual machine is further configured to: before lending the first PCPU to the hypervisor or borrowing the second PCPU from the hypervisor, send first request information to the hypervisor, wherein the first request information is used to request information about the quantity of PCPUs allocated by the hypervisor to the first virtual machine; and
the first virtual machine is further configured to receive first response information sent by the hypervisor for the first request information, wherein the first response information indicates the information about the quantity.

11. The apparatus according to claim 9 or 10, wherein the quantity of PCPUs allocated by the hypervisor to the first virtual machine is N, wherein N is a positive integer, and N is less than or equal to M; and
the first virtual machine is configured to lend at least a part of N-L PCPUs to the hypervisor when the first load status indicates that a quantity L of VCPUs that run tasks and that are in the M VCPUs on the first virtual machine is less than N, wherein L is a positive integer.

12. The apparatus according to claim 11, wherein the plurality of virtual machines comprise a second virtual machine;
the second virtual machine is configured to obtain a second load status of M VCPUs on the second virtual machine;
the second virtual machine is further configured to send second request information to the hypervisor when the second load status indicates that a quantity of VCPUs that run tasks and that are in the M VCPUs on the second virtual machine is less than a quantity of PCPUs allocated by the hypervisor to the second virtual machine, wherein the second request information is used to request to borrow a PCPU from the hypervisor; and
the hypervisor is configured to lend at least a part of the N-L PCPUs to the second virtual machine based on the second request information.

13. The apparatus according to claim 9 or 10, wherein the quantity of PCPUs allocated by the hypervisor to the first virtual machine is R, wherein R is a positive integer, and R is less than or equal to M;
the first virtual machine is configured to send third request information to the hypervisor when the first load status indicates that a quantity L of VCPUs that run tasks and that are in the M VCPUs on the first virtual machine is greater than R, wherein the third request information is used to request to borrow L-R PCPUs from the hypervisor, and L is a positive integer; and
the hypervisor is configured to lend the L-R PCPUs to the first virtual machine based on the third request information.

14. The apparatus according to claim 13, wherein the plurality of virtual machines further comprise a third virtual machine; and
the hypervisor is configured to: before lending the L-R PCPUs to the first virtual machine, borrow the L-R PCPUs from the third virtual machine when a minimum quantity of PCPUs required by the third virtual machine is less than a quantity of PCPUs occupied by the third virtual machine.

15. The apparatus according to any one of claims 9 to 14, wherein the first virtual machine is configured to:
unbind a first VCPU from a task run on the first VCPU, wherein the M VCPUs on the first virtual machine comprise the first VCPU, and there is a mapping relationship between the first VCPU and the first PCPU; and
migrate the task run on the first VCPU to a second VCPU, wherein the second VCPU is a VCPU other than the first VCPU in the M VCPUs on the first virtual machine.

16. The apparatus according to any one of claims 9 to 15, wherein the first virtual machine is a virtual machine corresponding to a real-time criticality system.

17. A resource scheduling apparatus, comprising:
a memory, configured to store a computer program; and
a processor, configured to execute the computer program stored in the memory, to enable the apparatus to perform the resource scheduling method according to any one of claims 1 to 8.

18. An intelligent driving device, comprising the apparatus according to any one of claims 9 to 17.

19. The intelligent driving device according to claim 18, wherein the intelligent driving device is a vehicle.

20. A computer-readable storage medium, wherein the computer-readable storage medium stores a computer program, and when the computer program is executed by a computer, the resource scheduling method according to any one of claims 1 to 8 is implemented.

21. A chip, comprising a circuit, wherein the circuit is configured to perform the resource scheduling method according to any one of claims 1 to 8.
